# EUROPEAN PATENT SPECIFICATION

(11) **EP 2 717 289 B1**
(45) Date of publication and mention of the grant of the patent: **29.07.2015**
(21) Application number: 11866107.3
(22) Date of filing: 24.05.2011
(51) Int. Cl.: H01H 83/02, H01H 9/54, H02H 3/093, H02H 1/04

(54) **ELECTRONIC CIRCUIT BREAKER**
ELEKTRONISCHER SCHUTZSCHALTER
COUPE-CIRCUIT ÉLECTRONIQUE

(43) Date of publication of application: 09.04.2014
(73) Proprietor: Mitsubishi Electric Corporation, Tokyo 100-8310 (JP)
(72) Inventor: NOMURA Toshimitsu, Tokyo 100-8310 (JP); MORI Mitsugi, Tokyo 100-8310 (JP); HAMANO Keita, Tokyo 100-8310 (JP)
(74) Representative: Hoffmann Eitle
(86) International application number: PCT/JP2011/061829
(87) International publication number: WO 2012/160647

(56) References cited:
- EP-A2- 0 326 237
- WO-A1-2011/041843
- JP-A- 2002 140 974
- JP-A- 2006 202 534
- JP-A- 2008 186 592
- JP-A- 2008 204 631
- US-A- 4 428 022
- US-A- 4 443 828

## Description

### TECHNICAL FIELD

The present invention relates to an electronic circuit breaker having an alarm device for converting a tripped state into an electric signal.

### BACKGROUND ART

Conventionally, as an electronic circuit breaker, a circuit breaker is known that includes: a current transformer for detecting current on an AC electric path; a rectification circuit for rectifying a secondary output of the current transformer in a full-wave fashion; a power supply circuit connected to the rectification circuit, a detection resistor for outputting voltage proportional to the current on the AC electric path; a timing circuit for outputting a tripping signal a predetermined time after the level of a detected voltage signal exceeds a predetermined value; and an electromagnetic tripping device (for example, a trip coil) driven by the tripping signal, which circuit breaker is configured to interrupt the electric path via open-close means (for example, see Patent Document 1),

In the circuit breaker of this type, measurement of fault current that has caused tripping can be performed by using a current value measured by the timing circuit as the fault current.

In addition, in order to perform interruption immediately when large current flows on the electric path due to short circuit or the like, generally, a tripping device (with long-timing and short-timing characteristics) using an electronic circuit, and a mechanical electromagnetic tripping device with an instantaneous characteristic are provided (for example, see Patent Document 2)

Document US 4 443 828 A discloses a low voltage circuit breaker with a current sensing unit having a magnetic circuit with three branches, which comprises an instantaneous electromagnetic trip mechanism and a static long time and short time delay trip unit, the latter unit being governed by a signal attenuated by a rating selection device. The technical problem of validating the current measurement value is not addresses or indicated by the document US 4 443 828

The document US 4 428 022 A relates to circuit interrupter implementing instantaneous and delayed tripping as well as thermal switch as a backup system, wherein plurality of display and visual indication functionalities are provided. In particular, the display in case of tripping due to the thermal switch backup system (e.g. because of overcurrent) is provided as follows (see column 12, lines 16-22): "Should this system initiate a trip operation, the Instantaneous LED 92 will be lighted, a value of 15.93 PU current value will be displayed on the numeric display 80, and an INSTANTANEOUS signal sent by the data I/O system." That is, the display of the circuit interrupter uses a fixed current display value in case of thermal tripping, and not the measured current value, which is an indication that the measured value is not expected to be a valid one in such a condition, thus disclosing the concept of tripping type dependent value display. However, the determination of the tripping type and consequently of the validity of the measurement signal based on the timing of the generation of the tripping signal is not disclosed in the document US 4 428 022 A.

The document EP 0 326 237 A2 relates to the determination of the validity of a sensed-current signal before issuing a trip signal to interrupt the current in case of overcurrent conditions. This document addresses the problem of validating the current measurement, which in case of overcurrent e.g. short circuit condition could be inaccurate due to the saturation of the measuring transformer (see column 1, line 40 to column 2, line 36), however it proposes an alternative solution of validating by varying the load on the current-sensing device (see column 3, line 48 to column 4, line 39; column 6, line 42 to column 7, line 53). In particular, the validity check in EP 0 326 237 A2 is executed prior to the tripping action and is used for taking the decision on the further tripping operation, thus providing the disadvantage of delayed triggering of the tripping operation.

### CITATION LIST

### PATENT DOCUMENT

Patent Document 1: Japanese Patent No. 2851485
Patent Document 2: Japanese Laid-Open Patent Publication No. 07-326273

### SUMMARY OF THE INVENTION

### PROBLEMS TO BE SOLVED BY THE INVENTION

In order to reduce the size of the conventional circuit breaker, it is necessary to reduce the size of the current transformer which detects the current on the AC electric path. However, if the size of the current transformer is reduced, the sectional area of a core of the current transformer is to be reduced. Then, in an excessive current region due to short circuit or the like, the output .

of the current transformer becomes a distorted waveform due to magnetic saturation, and therefore the current value cannot be measured accurately. In addition, in such an excessive current region, since the electromagnetic tripping device operates to open an open-close contact before the timing circuit outputs a tripping signal, in some cases, the current value cannot be measured accurately. Thus, there is a problem that an inaccurate current value is displayed.

The present invention has been made to solve the above problem, and an object of the present invention is to provide an electronic circuit breaker, having an electronic tripping device and an electromagnetic tripping device, capable of determining that the current value has failed to be measured accurately because excessive current has flowed on an AC electric path.

### SOLUTION TO THE PROBLEMS

An electronic circuit breaker according to the present invention includes: an open-close contact for opening or closing an AC electric path; current detection means for detecting current flowing on the AC electric path and outputting a detection signal corresponding to the current; a timing circuit for, based on the output signal from the current detection means, outputting a trip signal for opening the open-close contact, a predetermined time after the current flowing on the AC electric path has exceeded a predetermined value; an electronic tripping device for opening the open-close contact by being energized by the trip signal; an electromagnetic tripping device for opening the open-close contact faster than the first tripping device by being electromagnetically energized by excessive current flowing on the AC electric path; and an alarm device for generating an output signal when the open-close contact has been opened by the electronic tripping device or the electromagnetic tripping device. The timing circuit receives the output signal from the alarm device, and based on the timing of generation of the output signal, determines whether or not measurement of a fault current value based on the output signal from the current detection means is accurate.

### EFFECT OF THE INVENTION

According to the present invention, in an electronic circuit breaker having an electronic tripping device and an electromagnetic tripping device, an output signal from an alarm device is inputted to a timing circuit. Therefore, it becomes possible to easily provide an electronic circuit breaker capable of, when the current value has failed to be measured accurately because excessive current has flowed on an AC electric path, determining this fact accurately.

### BRIEF DESCRIPTION OF THE DRAWINGS

[FIG. 1] FIG. 1 is a block diagram showing the configuration of an electronic circuit breaker according to embodiment 1 of the present invention.
[FIG. 2] FIG. 2 is a block diagram of a timing circuit according to embodiment 1.
[FIG. 3] FIG. 3 is a timing chart showing the operation of the electronic circuit breaker according to embodiment 1.
[FIG. 4] FIG. 4 is an output waveform diagram of a current transformer according to embodiment 1.
[FIG. 5] FIG. 5 is a flowchart showing the operation of the timing circuit according to embodiment 1.

### DESCRIPTION OF EMBODIMENTS

### Embodiment 1

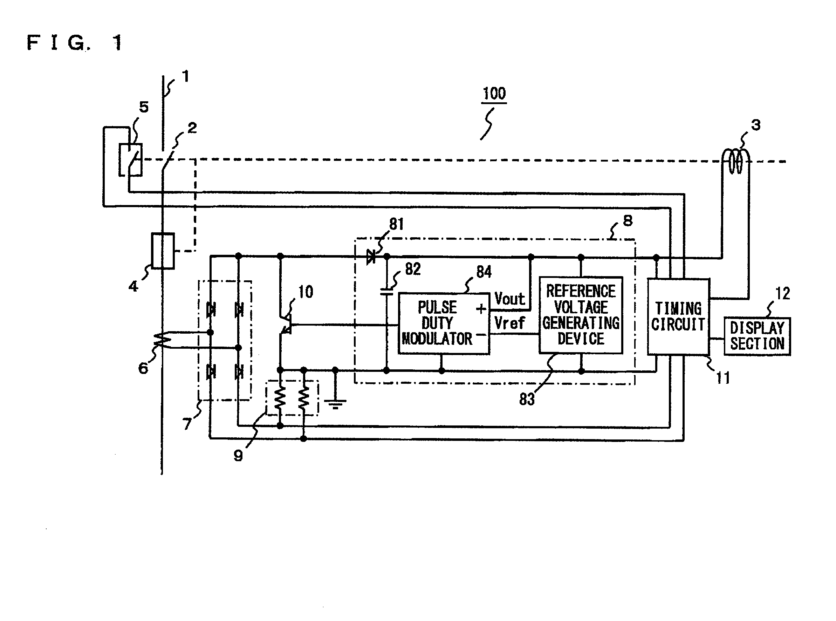

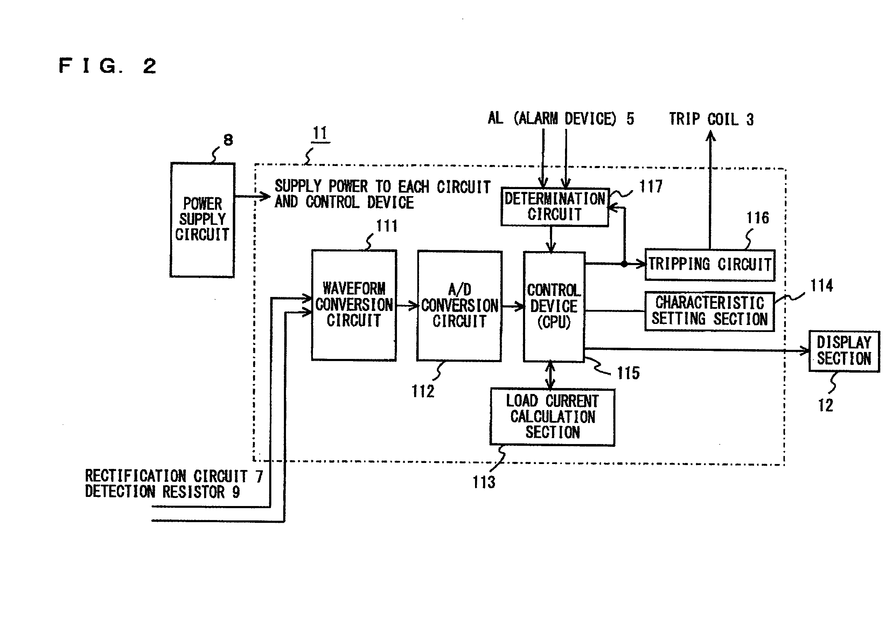

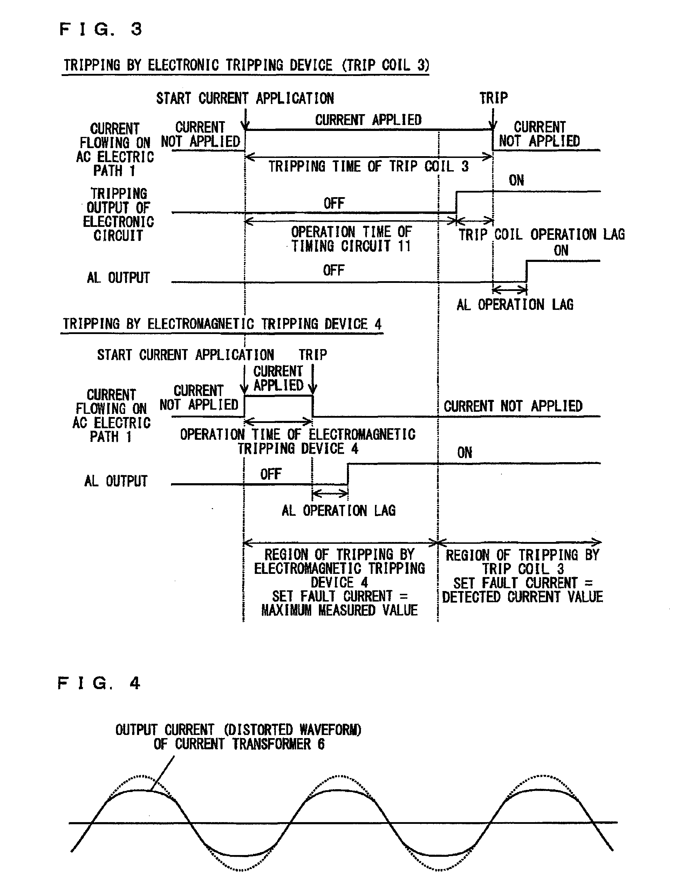

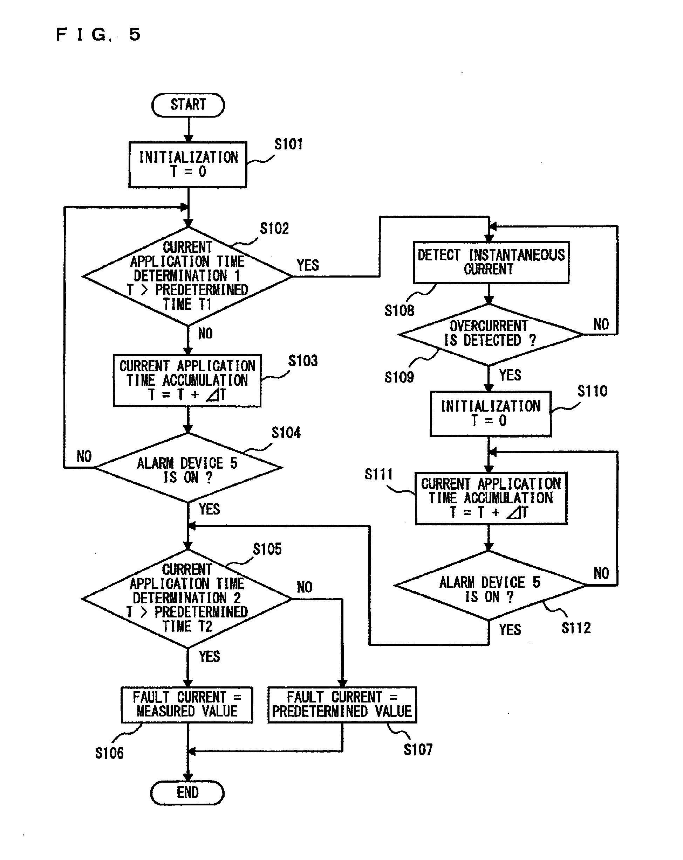

FIG. 1 is a block diagram showing the configuration of an electronic circuit breaker according to embodiment 1 of the present invention. FIG. 2 is a block diagram showing the configuration of a timing circuit 11. FIG. 3 is a timing chart showing the operation of the electronic circuit breaker according to embodiment 1. FIG. 4 is an output waveform diagram of a current transformer 6. FIG. 5 is a flowchart showing the operation of a determination circuit 117.

In FIG. 1, an electronic circuit breaker 100 includes: an open-close contact 2 for opening or closing an AC electric path 1; the current transformer 6 provided on the AC electric path 1, for outputting a current signal proportional to load current flowing on the AC electric path 1; a mechanical electromagnetic tripping device 4 provided on the AC electric path 1, for opening an open-close contact 2 by excessive current; a rectification circuit 7 connected to the secondary side of the current transformer 6; a detection resistor 9 connected to the output side of the rectification circuit 7 via a transistor 10 described later; a power supply circuit 8 connected in parallel with the transistor 10; a timing circuit 11 connected in parallel with the power supply circuit 8 so that supply voltage is supplied thereto, and connected to the detection resistor 9, whereby the timing circuit 11 outputs an output signal a predetermined time after the level of a detected voltage signal exceeds a predetermined value; a trip coil 3 driven by the output signal from the timing circuit 11, thereby opening the open-close contact 2; and a display section 12 (including, for example, a liquid crystal display device) connected to the timing circuit 11, for displaying a measured value such as fault current.

In addition, an alarm device (hereinafter, referred to as an AL) 5 is connected to the timing circuit 11, for converting the state where the electronic circuit breaker 100 has tripped and the open-close contact 2 has opened, into an electric signal, and outputting the electric signal.

The power supply circuit 8 is composed of: a reverse flow preventing device, e.g., a diode 81, connected between the positive output side of the rectification circuit 7 and the trip coil 3; a smoothing capacitor 82 connected between the cathode of the diode 81 and an earth wire of the power supply circuit 8; a reference voltage generating device 83 connected in parallel with the smoothing capacitor 82; and a pulse duty modulator 84 provided between the reference voltage generating device 83 and the smoothing capacitor 82, for, by comparing output voltage Vout of the power supply circuit 8 and output voltage Vref of the reference voltage generating device, outputting a pulse train signal having a pulse width corresponding to the period during which the output voltage Vout exceeds the output voltage Vref, to the base of the transistor 10.

The timing circuit 11 is composed of: a waveform conversion circuit 111 for obtaining the effective value of an output voltage signal induced on the detection resistor 9; an A/D conversion circuit 112 for converting an analog voltage signal from the waveform conversion circuit 111 to a digital signal; a load current calculation section 113 for calculating a current value flowing on the AC electric path 1 based on the digital signal from the A/D conversion circuit 112; a characteristic setting section 114 for setting a rated current, and an overcurrent tripping characteristic which is the relationship of a tripping time relative to the load current calculation value; a control device 115 including a microcomputer (CPU) for outputting an overcurrent tripping signal based on the overcurrent tripping characteristic set by the characteristic setting section 114 and the current value from the load current calculation section 113; a tripping circuit 116 for energizing the trip coil 3 by the tripping signal from the control device 115; and a determination circuit 117 for, by receiving the tripping signal from the control device 115 and an AL signal outputted from the AL 5, determining whether tripping has been performed by the electromagnetic tripping device 4 or the trip coil 3, when the open-close contact 2 has been tripped.

In addition, the control device 115 causes the connected display section 12 (including, for example, a liquid crystal display device) to display a calculation result of the load current calculation section 113.

Next, the tripping operation performed when overcurrent flows on the AC electric path 1 will be described with reference to a timing chart in FIG. 3.

In the case of tripping by an electronic circuit (trip coil 3), when current application on the AC electric path 1 is started and then a predetermined time set on the timing circuit 11 has elapsed, the trip coil 3 is energized and the open-close contact 2 is opened. An AL operation lag time after the open-close contact 2 has been actually opened, the output signal from the AL 5 which is inputted to the timing circuit 11 is switched. In addition, in an overcurrent region in which measurement can be normally performed, the electromagnetic tripping device 4 does not operate.

On the other hand, when excessive current flows due to short circuit or the like, tripping is performed by the electromagnetic tripping device 4. In this case, the electromagnetic tripping device 4 operates earlier than the trip coil 3 performs tripping, to open the open-close contact 2.

An AL operation lag time after the open-close contact 2 has been actually opened, the output signal from the AL 5 which is inputted to the timing circuit 11 is switched.

In an excessive current region in which tripping is performed by the electromagnetic tripping device 4, as shown in FIG. 4, the output waveform of the current transformer 6 becomes a distorted waveform. Therefore, fault current cannot be normally measured.

For the above reason, in the excessive current region, a difference in the tripping time occurs between the tripping by the electromagnetic tripping device 4 and the tripping by the trip coil 3. Therefore, a time difference also occurs in the switching of the output signal of the AL 5.

The determination circuit 117 receives the tripping signal outputted from the control device 115 and the AL signal outputted from the AL 5, and can recognize the difference in the tripping method based on the timings of receiving these signals.

Display processing of fault current will be described with reference to the flowchart shown in FIG. 5.

First, the case where excessive current due to short circuit or the like flows at the start of current application by power-on of the circuit breaker will be described.

In this case, there is a possibility that applied current measurement processing by the control device 115 cannot be performed in time. Therefore, after initialization processing is performed (step S101), current application time determination 1 is performed (step S102), and then the process proceeds to accumulation processing of a current application time T in step S103 because the current application time T has not reached a predetermined time T1 yet.

Next, in step S104, whether or not the input signal from the AL 5 is ON is determined. If the input signal from the AL 5 is not ON, the process returns to step S102. If the input signal from the AL 5 is ON, the process proceeds to step S105 to determine whether the current application time T has exceeded a predetermined time T2.

If the current application time T has exceeded the predetermined time T2, it is determined that the trip coil 3 has been driven to cause tripping by the tripping signal from the timing circuit 11 while the electromagnetic tripping device 4 does not operate.

That is, since the excessive current at this time is within a range that allows the CPU 115 to accurately measure the excessive current, the current value measured by the CPU 115 is set as fault current (step S106).

On the other hand, if the current application time T has not exceeded the predetermined time T2 yet, it is determined that the electromagnetic tripping device 4 has operated to cause tripping. That is, since the excessive current at this time is so large that the CPU 115 cannot measure the excessive current accurately, it is considered that the current value measured by the CPU 115 is inaccurate. Therefore, a predetermined value larger than a measurable value is set as fault current (step S107). Alternatively, the display section 12 displays indication that the fault current is out of the measurement range.

Next, the case where excessive current due to short circuit or the like flows after the circuit breaker is powered on will be described.

In this case, since some time has passed since the start of current application, the current application time T has already reached the predetermined time T1 in the current application time determination 1 (step S102). Therefore, the process proceeds to step S108 and the subsequent steps. Detection processing of an instantaneous current value is performed (step S108), and then whether or not the instantaneous current value is overcurrent that causes tripping is determined (step S109).

If the instantaneous current value is not overcurrent, the process returns to the detection processing of an instantaneous current value (step S108). On the other hand, if the instantaneous current value is overcurrent, the current application time T is initialized (step S108), and accumulation processing of the current application time T is performed again (step S111).

Next, in step S112, whether or not the input signal from the AL 5 is ON is determined. If the input signal from the AL 5 is not ON, the process returns to step S111 to perform accumulation processing of the current application time T. If the input signal from the AL 5 is ON, the process proceeds to step S105 to determine whether or not the current application time T has exceeded the predetermined time T2.

The subsequent processing is the same as in the case where excessive current due to short circuit or the like flows at the start of current application by power-on of the circuit breaker.

As described above, according to the present embodiment, since the output signal from the AL 5 is inputted to the timing circuit 11, whether tripping has been performed by the electromagnetic tripping device 4 or the trip coil 3 can be recognized based on the timing of switching of the output signal from the AL 5, and the fact that excessive current has flowed on the AC electric path so that the current value has failed to be measured accurately can be displayed.

In addition, since the display section 12 is connected to the timing circuit 11, when excessive current flows on the AC electric path so that the current value has failed to be measured accurately, the display section 12 can display a predetermined value larger than a measurable value as fault current, whereby the fact that the excessive current has flowed can be displayed.

### DESCRIPTION OF THE REFERENCE CHARACTERS

- 1: AC electric path
- 2: open-close contact
- 3: trip coil
- 4: electromagnetic tripping device
- 5: AL (alarm device)
- 6: current transformer
- 7: rectification circuit
- 8: power supply circuit
- 81: diode
- 82: smoothing capacitor
- 83: reference voltage generating device
- 84: pulse duty modulator
- 9: detection resistor
- 10: transistor
- 11: timing circuit
- 111: waveform conversion circuit
- 112: A/D conversion circuit
- 113: load current calculation section
- 114: characteristic setting section
- 115: control device (CPU)
- 116: tripping circuit
- 117: determination circuit
- 12: display section

## Claims

1. An electronic circuit breaker comprising:
an open-close contact(2) for opening or closing an AC electric path(1);
current detection means(6) for detecting current flowing on the AC electric path(1) and outputting a detection signal corresponding to the current;
a timing circuit(11) for, based on the output signal from the current detection means(6), outputting a trip signal for opening the open-close contact(2), a predetermined time after the current flowing on the AC electric path(1) has exceeded a predetermined value;
an electronic tripping device(3) for opening the open-close contact(2) by being energized by the trip signal;
an electromagnetic tripping device(4) for opening the open-close contact(2) faster than the first tripping device(3) by being electromagnetically energized by excessive current flowing on the AC electric path(1); **characterised by**
an alarm device(5) for generating an output signal when the open-close contact(2) has been opened by the electronic tripping device(3) or the electromagnetic tripping device(4),
wherein the timing circuit(11) receives the output signal from the alarm device(5), and based on the timing of generation of the output signal, determines whether or not measurement of a fault current value based on the output signal from the current detection means(6) is accurate.

2. The electronic circuit breaker according to claim 1, further comprising a display section(12) connected to the timing circuit(11),
wherein when the timing circuit(11) has determined that the measurement of the fault current value is not accurate, the timing circuit(11) causes the display section(12) to display indication that the measurement of the fault current value is not accurate.

3. The electronic circuit breaker according to claim 2, wherein a value beyond a measurement range is displayed as the indication that the measurement of the fault current value is not accurate.

4. The electronic circuit breaker according to claim 2, wherein
the timing circuit(11) includes: a determination circuit(117) for determining whether or not the measurement of the fault current value is accurate, based on the output signal from the alarm device(5) and the trip signal; and a load current calculation section (113) for calculating the fault current value based on the output signal from the current detection means(6), and
when the determination circuit has determined that the measurement of the fault current value is not accurate, the timing circuit(11) causes the display section(12) to display a predetermined value as the fault current value.

## Patentansprüche

1. Ein elektronischer Stromunterbrecher umfassend:
einen Öffnen-Schließkontakt (2) zum Öffnen oder Schließen eines elektrischen Wechselstrompfads (1);
Stromerkennungsmittel (6) zum Erkennen eines auf dem elektrischen Wechselstrompfad (1) fließenden Stroms und Ausgeben eines Erkennungssignals entsprechend dem Strom;
einen Timingschaltkreis (11) zum Ausgeben, basierend auf dem Ausgangssignal der Stromerkennungsmittel (6), eines Auslösesignals zum Öffnen des Öffnen-Schließkontakts (2) eine vorbestimmte Zeit, nachdem der auf dem elektrischen Wechselstrompfad (1) fließende Strom einen vorbestimmten Wert überschritten hat;
eine elektronische Auslösevorrichtung (3) zum Öffnen des Öffnen-Schließkontakt (2), durch Erregtsein durch das Auslösesignal;
eine elektromagnetische Auslösevorrichtung (4) zum Öffnen des Öffnen-Schließkontakts (2) schneller als die erste Auslösevorrichtung (3) durch elektromagnetisches Erregtsein durch auf dem elektrischen Wechselstrompfad (1) fließenden übermäßigen Strom;
**gekennzeichnet durch**
eine Alarmvorrichtung (5) zum Erzeugen eines Ausgangssignals, wenn der Öffnen-Schließkontakt (2) durch die elektronische Auslösevorrichtung (3) oder die elektromagnetische Auslösevorrichtung (4) geöffnet wurde,
wobei der Timingschaltkreis (11) das Ausgangssignal von der Alarmvorrichtung (5) erhält und basierend auf dem Timing einer Erzeugung des Ausgangssignals bestimmt, ob eine Messung eines Fehlerstromwerts basierend auf dem Ausgangssignal von den Stromerkennungsmitteln (6) richtig ist oder nicht.

2. Der elektronische Stromunterbrecher gemäß Anspruch 1 weiter umfassend eine mit dem Timingschaltkreis (11) verbundene Anzeigeeinheit (12),
wobei wenn der Timingschaltkreis (11) bestimmt hat, dass die Messung des Fehlerstromwerts nicht richtig ist, der Timingschaltkreis (11) die Anzeigeeinheit (12) zum Anzeigen eines Hinweises, dass die Messung des Fehlerstromwerts nicht richtig ist, veranlasst.

3. Der elektronische Stromunterbrecher gemäß Anspruch 2, wobei ein Wert über einen Messbereich hinaus als der Hinweis, dass die Messung des Fehlerstromwerts nicht richtig ist, angezeigt ist.

4. Der elektronische Stromunterbrecher gemäß Anspruch 2, wobei
der Timingschaltkreis (11) umfasst: einen Bestimmungsschaltkreis (117) zum Bestimmen, ob die Messung des Fehlerstromwerts richtig ist oder nicht, basierend auf dem Ausgangssignal von der Alarmvorrichtung (5) und dem Auslösesignal; und eine Laststrom-Berechnungseinheit (113) zum Berechnen des Fehlerstromwerts basierend auf dem Ausgangssignal von den Stromerkennungsmitteln (6) und
wenn der Bestimmungsschaltkreis bestimmt hat, dass die Messung des Fehlerstromwerts nicht richtig ist, der Timingschaltkreis (11) die Anzeigeeinheit (12) zum Anzeigen eines vorbestimmten Wertes als den Fehlerstromwert veranlasst.

## Revendications

1. Disjoncteur électronique comprenant :
un contact d'ouverture-fermeture (2) pour ouvrir ou fermer un trajet électrique de courant alternatif (1) ;
des moyens de détection de courant (6) pour détecter un courant circulant sur le trajet électrique de courant alternatif (1) et délivrer un signal de détection correspondant au courant ;
un circuit de temporisation (11) pour délivrer, sur la base du signal de sortie des moyens de détection de courant (6), un signal de déclenchement pour ouvrir le contact d'ouverture-fermeture (2), un temps prédéterminé après que le courant circulant sur le trajet électrique de courant alternatif (1) a dépassé une valeur prédéterminée ;
un dispositif de déclenchement électronique (3) pour ouvrir le contact d'ouverture-fermeture (2) en étant alimenté par le signal de déclenchement ;
un dispositif de déclenchement électromagnétique (4) pour ouvrir le contact d'ouverture-fermeture (2) plus rapidement que le premier dispositif de déclenchement (3) en étant alimenté électromagnétiquement par le courant en excès circulant sur le trajet électrique de courant alternatif (1) ; **caractérisé par**
un dispositif d'alarme (5) pour générer un signal de sortie lorsque le contact d'ouverture-fermeture (2) a été ouvert par le dispositif de déclenchement électronique (3) ou le dispositif de déclenchement électromagnétique (4),
dans lequel le circuit de temporisation (11) reçoit le signal de sortie du dispositif d'alarme (5) et, sur la base de la temporisation de génération du signal de sortie, détermine si la mesure d'une valeur de courant de défaut basée sur le signal de sortie des moyens de détection de courant (6) est ou non précise.

2. Disjoncteur électronique selon la revendication 1, comprenant en outre une section d'affichage (12) connectée au circuit de temporisation (11),
dans lequel, lorsque le circuit de temporisation (11) a déterminé que la mesure de la valeur de courant de défaut n'est pas précise, le circuit de temporisation (11) amène la section d'affichage (12) à afficher une indication que la mesure de la valeur de courant de défaut n'est pas précise.

3. Disjoncteur électronique selon la revendication 2, dans lequel une valeur au-delà d'une plage de mesure est affichée en tant qu'indication que la mesure de la valeur de courant de défaut n'est pas précise.

4. Disjoncteur électronique selon la revendication 2, dans lequel
le circuit de temporisation (11) comprend : un circuit de détermination (117) pour déterminer si, oui ou non, la mesure de la valeur de courant de défaut est précise, sur la base du signal de sortie provenant du dispositif d'alarme (5) et du signal de déclenchement ; et une section de calcul de courant de charge (113) pour calculer la valeur de courant de défaut sur la base du signal de sortie des moyens de détection de courant (6), et
lorsque le circuit de détermination a déterminé que la mesure de la valeur de courant de défaut n'est pas précise, le circuit de temporisation (11) amène la section d'affichage (12) à afficher une valeur prédéterminée en tant que valeur de courant de défaut.
